**Europäisches Patentamt**

**European Patent Office**

**Office européen des brevets**

(11) Publication number:

**0 117 919**
**B1**

(12) **EUROPEAN PATENT SPECIFICATION**

(45) Date of publication of patent specification: **23.08.89**

(51) Int. Cl.⁴: **B 01 D 13/04, C 08 J 7/04**

(21) Application number: **83113074.5**

(22) Date of filing: **23.12.83**

(54) A membrane treatment method for semipermeable membranes.

(30) Priority: **24.12.82 JP 226382/82**

(43) Date of publication of application:
**12.09.84 Bulletin 84/37**

(45) Publication of the grant of the patent:
**23.08.89 Bulletin 89/34**

(84) Designated Contracting States:
**CH DE FR GB IT LI NL SE**

(56) References cited:
**EP-A-0 050 864**
**DE-A-2 625 056**
**DE-C- 625 003**
**GB-A-2 064 367**
**US-A-4 039 440**
**US-A-4 165 305**

**PATENT ABSTRACTS OF JAPAN, vol. 7, no. 83
(C-160), 7th April 1983, page 23 C 160; & JP - A -
58 11005 (TORAY K.K.) 21-01-1983**

(73) Proprietor: **TORAY INDUSTRIES, INC.**
**2, Nihonbashi-Muromachi 2-chome Chuo-ku
Tokyo 103 (JP)**

(72) Inventor: **Yukio, Nakagawa**
**7-5-510, Otowa Noda-cho
Yamashina-ku Kyoto-shi Kyoto, 607 (JP)**
Inventor: **Katsufumi, Ooto**
**7-12-3, Sonayama
2-chome, Otsu-shi Shiga-ken (JP)**
Inventor: **Masaru, Kurihara**
**10-B-4-32, Sonoyama
2-chome, Otsu-shi Shiga-ken (JP)**

(74) Representative: **Kador & Partner
Corneliusstrasse 15
D-8000 München 5 (DE)**

Courier Press, Leamington Spa, England.

**Description**

The present invention relates to a method for improving the selective permeability of a semipermeable membrane.

Up to the present, various kinds of semipermeable membranes have been proposed as selectively separable membranes for use in the reverse osmosis process, and these semipermeable membranes have been widely used, for example, in the desalination of sea water and brackish water, and in recovering valuable materials.

There are various kinds of these semipermeable membranes, for instance, an asymmetric membrane or so-called "Loeb type" membrane represented by cellulose acetate membranes, and a composite membrane consisting of a microporous substrate and an ultrathin film formed thereon as a semipermeable barrier layer made of a different kind of polymer to that constituting said substrate, which may be a polyamide, cross-linked polymer based on furfuryl alcohol, etc.

Semipermeable composite membranes have the following characteristics or merits over the so-called "Loeb type" membranes:

(1) Optimum combinations of the substrate and ultrathin film or barrier layer can be designed and selected according to the purpose and object of application;

(2) There is no necessity to preserve or store the semipermeable membranes in water or in a wet condition; dry preservation is also possible;

(3) In general, they are more resistant to hydrolysis by acid or alkali and deterioration by microorganisms as observed in particular in cellulose acetate membranes.

Some well-known semipermeable composite membranes, for instance, consist of a microporous substrate made of polysulfone polyvinyl chloride or cellulose acetate and a thin film formed thereon, as a barrier layer, composed of a cross-linked polymer based on furfuryl alcohol (U.S. patent No. 3,926,798) and others are prepared with a barrier layer composed of a cross-linked polymer of polyethyleneimine (Laid-Open Japanese Patent Application No. 127,481/1977 (Tokkai-sho 52—127481)), and so forth.

The inventors of the present invention have already proposed a semipermeable barrier layer composed of a cross-linked polymer obtained by polycondensation with furfuryl alcohol and such polyfunctional alcohols as inositol or sorbitol and tris-2-hydroxyethyl-isocyanurate in the presence of sulfuric acid or the like as a catalyst, and it was found that said semipermeable composite membranes had the characteristics and merits of the aforesaid composite membranes, and also exhibited extremely selective separation performance not only for sea water and brackish water but also for many water-soluble organic compounds and inorganic compounds (Laid-Open Japanese Patent Application No. 24,602/1982 (Tokkai-sho 57—24602)).

These semipermeable membranes are structured in such a way that a thin skin layer or barrier layer which substantially determines reverse osmosis performance is supported by a layer called the microporous layer or substrate, wherein the thickness of the skin layer or barrier layer is about 0.1 μm and it is generally considered that the smaller the thickness is, the more favorable it is for the semipermeable membrane since water permeability increases, although its quality tends to be unstable. For example, for reverse osmosis to be used in industrial practice, semipermeable membranes must be formed into membrane modules, and furthermore, since they are exposed in practice to such high pressures as several kg/cm$^2$, selective separation performance of the semipermeable membranes generally decreases due not only to physical factors such as pinholes on the surface of the semipermeable membranes, some mechanical failures and embossing of the semipermeable membranes, but also to chemical factors such as hydrolysis observed in the case of cellulose acetate membranes.

It has also been proposed to maintain or improve desalination performance from another point of view. There are several proposals mainly for cellulose acetate membranes, for example, for a procedure to dose surface active agents in the feed-water as in Laid-Open Japanese Patent Application No. 28,650/1973 (Tokkai-sho 48—28650), and a method to improve the selective separation performance of the deteriorated membranes with polyvinyl chloride has been proposed in Japanese Patent Application No. 32,869/1977 (Tokkai-sho 52—32869), and further a method to improve the selective separation performance with copolymers of vinyl acetate and unsaturated carboxylic acid has been proposed in Japanese Patent Application No. 13,431/1978 (Tokkai-sho 53—13431). The inventors of the present invention have also proposed membrane treatment agents mainly composed of vinyl polymers having saponified ester groups modified by carboxylic acid (Laid-Open Japanese Patent Application No. 114,306 (Tokkai-sho 55—114,306)).

Mainly for synthetic semipermeable membranes, for example, methods to improve selective separation performance with polyvinylmethyl ether and with tannic acid are proposed in U.S. patent nos. 3,373,056 and 3,853,755. Furthermore, PB report no 82—157,975 examines a method to improve selective separation performance by repairing the failed parts of semipermeable membranes with various kinds of synthesized colloids.

The inventors of the present invention have also proposed a method to improve the selective separation performance for semipermeable membranes consisting of cross-linked polymers involving furfuryl alcohol as an essential monomer component with water-soluble amines (Laid-Open Japanese Patent Application No. 11,005/1983 (Tokkai-sho 58—11005)), and the present invention has been worked

2

out as the result of further investigations.

Charge modification of microporous membranes made of cellulose esters, polyvinyliden fluoride or nylon was contacting with two kind of aqueous amine solutions which membranes may be used for the filtration of biological fluids are known from EP—A—0,050,864.

It is the object of the present invention to improve the selective separation performance and the durability of a semipermeable membrane.

The object of the present invention can be obtained by a membrane treatment method for semipermeable membranes, comprising:

contacting the membrane in consecutive steps with:

(i) a water-soluble amine; and

(ii) a water-soluble aldehyde in feed water both compounds reacting to form a water-soluble or very slightly water-soluble material.

According to the invention a remarkable improvement in the selective separation performance of said semipermeable membranes and in its durability is obtained by fixing the effective substances on the surface of said semipermeable membranes in an extremely simple way, i.e. said semipermeable membranes are brought in contact with strongly diluted aqueous solutions of an amine and an aldehyde which are individually water-soluble but form water-insoluble or only slightly water-soluble materials when in contact with each other in due order and for only a short time.

Optimum combinations of said water-soluble compounds are usually selected with respect to the reactivity between said water-soluble amines and aldehydes and the kind of said semipermeable membrane. The water-soluble or slightly water-soluble materials preferably have a solubility in water of less than 100 ppm.

In the case of semipermeable membranes consisting of cross-linked polymers containing furfuryl alcohol as an essential monomer component and semipermeable polyamide membranes, for example, combinations of water-soluble amine compounds and water-soluble aldehydes in this order or sequence lead to preferred results. More specifically, a procedure wherein the semipermeable membranes, after being treated with aqeuous solutions containing polyfunctional amines in the form of polymers such as polyethyleneimine or monomers such as triethylenetetramine, are then treated with aqueous solutions involving such polyfunctional water-soluble aldehydes and glutaldehyde or glyoxal which form water-insoluble or very slightly water-soluble materials with the aforesaid amines, leads to remarkable improvement of both the selective separation performation and the durability of this improvement.

Said semipermeable membranes consisting of cross-linked polymers based on furfuryl alcohol as an essential monomer component include those, for example, having barrier layers which are obtained from the thermopolymerization of furfuryl alcohol and/or mixtures of furfuryl alcohol and inosital, sorbitol, tris(2-hydroxy)-isocyanurate or the like in the presence of sulfuric acid, phosphoric acid or toluenesulfonic acid; preferred are those disclosed in U.S. patent no. 392,679 and laid-Open Japanese Patent Application Nos. 107,882/1979 (Tokkai-sho 54—107882), 159,807/1980 (Tokkai-sho 55—159807), etc., which were proposed by the inventors of the present invention.

More concrete examples of said semipermeable membranes consisting of polyamides are those disclosed in Laid-Open Japanese Patent Application Nos. 40,403/1981 (Tokkai-sho 56—40403), 24,304/1983 (Tokkai-sho 58—24303), etc., which were also proposed by the inventors of the present invention.

These aforesaid semipermeable membranes are usually composite membranes made of a microporous substrate consisting of polysulfone, polyvinyl chloride, polyvinylidene chloride, cellulose nitrate, but preferably polysulfone, and a film formed thereon as a barrier layer, which is composed of the aforesaid polymers.

The combination and the order or sequence of more than two kinds of water-soluble compounds which react at once whenever they are brought in contact with each other, are very important in particular for the improvement of the durability of the improved selective separation performance of said semipermeable membranes.

For the above described semipermeable composite membranes consisting of cross-linked polymers based on furfuryl alcohol including furfuryl alcohol as an essential monomer component and/or polyamides, combinations or water-soluble amines and water-soluble aldehydes, as effective substances, for example, and the due order or sequence lead to preferred results, and water-soluble amines are considered to contribute to improving the selective separation performance of said semipermeable membranes, and water-soluble aldehydes to improving the durability of the aforesaid improvement. It should be noted that the above described combinations and orders of water-soluble compounds for said semipermeable membranes are not always to be restricted to water-soluble amines and water-soluble aldehydes; any effective combination of any kind of effective compound may be applied to any kind of semipermeable membrane according to the inventive idea described above. It goes without saying that effective combinations of compounds or effective substances may be different from those described above and that semipermeable membranes consisting of the aforesaid cross-linked polymers based on furfuryl alcohol and/or polyamides or another kind of semipermeable membrane and optimum combinations of effective compounds must be selected experimentally in accordance with the foregoing data.

Said cross-linked polymers based on furfuryl alcohol as the essential monomer component are preferably obtained from the thermopolymerization of furfuryl alcohol and/or mixtures of furfuryl alcohol

3

and polyfunctional hydroxy compounds in the presence of an acid catalyst.

Said water-soluble compounds having polyfunctional amino groups according to the present invention, for example, ordinary alkyl amines, aromatic amines, acyclic or heterocyclic amines and oligomers or polymers thereof, etc., have a water solubility of at least 1 to 10 ppm or so. The alkyl amines are, for instance, ethylenediamine, trimethylenediamine, hexamethylenediamine, aminoguanadine, etc. Phenylenediamines, triaminobenzenes, phenylhydrazines, aminodiphenylamines, diaminodiphenylmethanes, etc., are representative of said aromatic amines. Of said acyclic or heterocyclic amines, diaminocyclohexanes, aminomethylpiperidine and aminopiperidine are well-known, for example. Examples of said oligomers or polymers having polyfunctional amino groups are triethylenetetramine, tetraethylenepentamine polyethyleneimine polyepiaminohydrin, polyepihalohydrin modified by ethylenediamine ("EPIAMINE"), etc. The water-soluble polyfunctional amines are preferably employed as essential agents for said membrane treatment.

With respect to the durability of the aforesaid improvement of the selective separation performances of said semipermeable membranes, oligomers or polymers having polyfunctional amino groups such as tetraethylenepentamine, polyethyleneimine polyepihalohydrin modified by aminomethylpiperidine yield preferred results.

As said water-soluble compounds having polyfunctional aldehyde groups, glyoxal, malonaldehyde, succinaldehyde, glutaldehyde, adipicaldehyde, phthaldehyde, for example, may be used in the present invention.

The above described improvements in selective separation performance and its durability due to the combinations of said water-soluble compounds are also observed for the unused fresh membranes immediately following their manufacture, and for membranes which are worn-out and deteriorated in selective separation performance after long-term operation.

Although the aforesaid membrane treatments for said semipermeable membranes by due combinations of water-soluble compounds yield sufficient improvement of their selective separation performance even without any pretreatment, a preferred improvement of selective separation performance and its durability may be achieved by carrying out such pretreatment as cleaning the surface of said semipermeable membranes, especially in the case of deteriorated membranes after long-term operation.

Procedures which are generally well-known may be adopted as pretreatment (membrane cleaning). When fouling is attributed to microorganisms, for example, cleaning procedures with surface active agents or enzyme detergents, etc., yield good results. In the case of fouling due to very slightly water-soluble metallic salts or inorganic colloids, ammonium citrate or the bis-sodium salt of ethylenediamine tetraacetic or the like may be effectively used.

Said improvements of selective separation performance by the present invention are not obtained only once, but again and again whenever said effects diminish or are exhausted.

Further, it goes without saying that said effects of the present invention are displayed not only in the case of flat membranes, but also for membrane elements or modules, which are the forms usually employed in industrial use. Any shape of the membrane elements or modules, such as tubular, spirally wound or hollow fiber, may be employed.

In the method of the present invention, the concentrations of said water-soluble compounds in their aqueous solutions are in the range of 0.1 ppm to 1% by weight, preferably 1 ppm to 1000 ppm. Secondly, although deionized water is preferably employed as the solvent of said water-soluble compounds, the feed-water to be treated may be directly dosed with the said compounds. Thirdly, an operating pressure may be applied in the range of 1—98.076 bar) (1 to 100 kg/cm$^2$) in usual cases, but a pressure range of 2.9—68.6 bar (3 to 70 kg/cm$^2$) is preferred. Finally, although the aforesaid improvements in selective separation performance and its durability are observed immediately after contact with said aqueous solutions involving said water-soluble compounds, a contact period in the range of 10 minutes to 10 hours is usually provided for said aqueous solutions of water-soluble compounds.

Although there is not much difference as to the degree of the above described improvements for the selective separation performance and its durability for said semipermeable membranes consisting of cross-linked polymers based on furfuryl alcohol as an essential monomer component and/or polyamides, for example, when treated with said water-soluble compounds, or with or without membrane cleaning before said treatment, or depending on the type of said semipermeable membrane to be treated, etc., orderly combinations of the above described water-soluble amines and water-soluble aldehyde exhibit such tremendous effects that the solute permeabilities are improved by about one to two thirds in selective separation performance, and their durability is thousands of hours.

The reason for the effectiveness of the present invention has not yet been definitely clarified theoretically. Nevertheless, the invention is extremely effective and its industrial significance is tremendous with respect not only to the improvement of permeated water quality or concentration efficiency, but also to its contribution to the economic merits derived from the above mentioned effectiveness itself.

Further merits of the invention will become apparent from the examples described in the following.

## Example 1

Using a semipermeable composite membrane composed of sulfonated polyfurfuryl alcohols made in accordance with U.S. patent no. 3,926,798, a test was carried out with an aqueous sodium chloride solution containing 3.5 wt% sodium chloride under operating conditions of 56 kg/cm$^2$, 25°C, pH 6.5, 50 cm/sec membrane surface velocity of the feed-water. The results after 20 hours of operation were that sodium chloride rejection was 99.4% and permeated water flux was 0.29 m$^3$/m$^2$ a day. The same test for reverse osmosis performance with the same membrane was continuously carried out under the same operating conditions as described above, and after 2000 hours of operation, sodium chloride rejection had declined to 98.6% and permeated water flux had increased to 0.33 m$^3$/m$^2$ a day.

After the same membrane was treated for one hour with feed-water dosed with 100 ppm of tetraethylenepentamine, it was washed with distilled water for two hours.

Further, after it was treated for two hours with freshly adjusted feed-water dosed with 100 ppm of glutaldehyde reverse osmosis performance was measured again with 3.5 wt% of aqueous sodium chloride solution, and the results were that the sodium chloride rejection was improved to 99.2% while permeated water flux was 0.28 m$^3$/m$^2$ a day.

This same membrane was treated continuously again under the same operating conditions as described above, and even after 200 hours of operation sodium chloride rejection remained at 99.1% while the permeated water flux was 0.29 m$^3$/m$^2$ a day.

In another experiment, the immediate appearance of water-insoluble or very slightly water-soluble materials was confirmed as soon as tetraethylenepentamine and glutaldehyde, each being water-soluble, were mixed together at 25°C.

## Comparative Example 1

Another membrane of the same kind was tested under the same operating conditions as in Example 1, except that the membrane treatment procedure with the feed-water dosed with glutaldehyde was omitted. In the case of membrane treatment with tetraethylenepentamine only, after 200 hours of operation sodium chloride rejection had declined to 98.6%.

## Comparative Example 2

Another membrane of the same kind was tested under the same operating conditions as in Example 1, except that the order membrane treatments with tetraethylenepentamine and glutaldehyde was reversed, i.e. the membrane treatment with tetraethylenepentamine was carried out after that with glutaldehyde. Although sodium chloride rejection was improved to 99.1% when the two membrane treatments were carried out in the above-described order, after 200 hours of operation the sodium chloride rejection of the aforesaid membrane had declined to 98.6% again.

## Example 2

Using a spirally wound membrane element (membrane area 7.0 m$^2$, diameter 10 cm, length 1 m, manufactured from the semipermeable composite membrane composed of cross-linked furfuryl alcohols produced according to Example 1 of Laid-Open Japanese Patent Application No. 24,602/1982 (Tokkai-sho 57—24602), a sea water desalination test by reverse osmosis was carried out. The test was carried out on pretreated sea water of 3.5 wt% salinity and below 4 of F.I., and the operating conditions were 56.9 g/bar (56 kg/cm$^2$), 25°C, pH 6.5, a feed-water flow rate of 10 l/min and water recovery of 13%. The feed-water was dosed with 10 ppm of sodium bisulfite in order to remove chlorine which was dosed as a sterilizer during the pretreatment process.

Although the initial desalination performance of the aforesaid element under the above-described operating conditions was 99.7% salt rejection and 0.34 m$^3$/m$^2$ a day as permeated water flux, salt rejection declined to 98.8% after 5000 hours of operation, and the product water quality no longer met the standard value (500 ppm) for drinking water set by the World Health Organization.

After dosing the feed-water with 30 ppm of polyethyleneimine ("P—1000" manufactured by Japan Catalytic Chemical Industry (Nippon Shokubai Kagaku Kogyo) Co., Ltd.) and treating it for one hour, and dosing the feed-water with 30 ppm of glyoxal and treating it for one hour the same way as with the polyethyleneimine, the sea water desalination test was continued using the same membrane element under the same conditions as before applying the foregoing membrane treatments, except that the dose of sodium bisulfate was varied to 80 ppm from 10 ppm. Salt rejection was improved to 99.6% while the permeated water flux was 0.27 m$^3$/m$^2$ a day. Even after 3000 hours of operation the salt rejection of the above-described element remained at 99.5% and the product water quality still met the WHO values.

In another experiment, the immediate occurrence of water-insoluble or very slightly water-soluble materials was confirmed as soon as polyethyleneimine and glyoxal, each being water-soluble, were mixed together at 25°C. At the same time it was confirmed by means of gas chromatography that no unreacted glyoxal remained, and new absorptions derived from the reacted product by infrared spectra appeared.

## Comparative Example 3

Another membrane element of the same kind was tested under the same operating conditions as in Example 2 except that the membrane treatment with glyoxal was omitted. In this case, 1000 hours after the membrane treatment with polyethyleneimine, salt rejection was already below 98.9% and the WHO value no longer met.

## Comparative Example 4

Condensation products of resorcinol and glyoxal were made. Another membrane of the same kind was tested in the same way as in Example 1 except that it was treated with feed-water dosed with 1000 ppm of the above-described resorcinol-glyoxal condensates instead of the successive treatments with feed-water dosed with tetraethylenepentamine and glyoxal in due order. No improvement in sodium chloride rejection was observed.

## Example 3

When two kinds of semipermeable composite membranes, i.e. those consisting of polyamide and cross-linked polyfurfuryl alcohol, made according to Example 1 in Laid-Open Japanese Patent Application No. 40,403/1981 (Tokkai-sho 56—40403) (polyamide membrane) and Example 2 in Laid-Open Japanese Patent Application No. 24,602/1982 (Tokkai-sho 57—24602) (cross-linked polyfurfuryl alcohol), respectively, were used with the same pretreated sea water of 3.5 wt% salinity as in Example 2 under the operating conditions of 54.9 bar (56 kg/cm$^2$), 25°C, pH 6.5 and 50 cm/sec membrane surface velocity of feed-water, salt rejection was 99.5 and 99.6%, respectively, while the permeated water flux was 0.36 m$^3$/m$^2$ a day and 0.38 m$^3$/m$^2$ a day, respectively.

The above-described membranes were first treated with feed-water dosed with 100 ppm of polyethyleneimine for 30 minutes and then treated with feed-water dosed with 100 ppm of glutaldehyde for 10 minutes under the same operating conditions as described above except that the operating pressure was changed to 58.8 bar (60 kg/cm$^2$). When the reverse osmosis performance of the two aforesaid membranes was measured with ordinary feed-water under the usual operating pressure of 54.9 bar (56 kg/cm$^2$) after both kinds of membrane treatments had been carried out, the salt rejection of the two membranes was improved to 99.7 and 99.8%, respectively, while the permeated water flux was 0.33 m$^3$/m$^2$ a day and 0.32 m$^3$/m$^2$ a day respectively. The reverse osmosis performance of each membrane hardly changed after 290 hours of operation.

## Examples 4 and 5

Two kinds of semipermeable composite membranes, i.e. those consisting of cross-linked polyfurfuryl alcohol and polyamide (the former being "MEMBRANE A" and the same membrane as manufactured in Example 2, and the latter being "MEMBRANE B"), were made in accordance with Example 1 in Laid-Open Japanese Patent Application No. 24,304/1983 (Tokkai-sho 58—24304), and alternatively operated with 3.5 wt% of an aqueous sodium chloride solution and 2.0 wt% of an aqueous ethanol solution under the operating conditions of 54.9 bar (56 kg/cm$^2$), 25°C, pH 6.5 and 50 cm/sec of membrane surface velocity of feed-water.

Both foregoing membranes were first treated with 1000 ppm of an aqueous polyethyleneimine solution for two hours and reverse osmosis performance tests for an aqueous sodium chloride solution and an aqueous ethanol solution were conducted. These membranes were then treated with 100 ppm of an aqueous glutaldehyde solution for one hour, and the usual reverse osmosis tests were carried out.

The test results are given in Table 1.

6

## Table 1

|  | Example 4 | | Example 5 | |
| Reverse Osmosis Performance | for NaCl aq.<br>Rej. - Flux | for Ethanol aq.<br>Rej. - Flux | for NaCl aq.<br>Rej. - Flux | for Ethanol aq.<br>Rej. - Flux |
| --- | --- | --- | --- | --- |
|  | ($\%$) - ($m^3/m^2$ a day) | ($\%$) - ($m^3/m^2$ a day) | ($\%$) - ($m^3/m^2$ a day) | ($\%$) - ($m^3/m^2$ a day) |
| Before Membrane Treatment | 99.7 - 0.40 | 92 - 0.47 | 99.4 - 0.41 | 85 - 0.44 |
| After Membrane Treatment<br>With Polyethyleneimine aq. | 99.9 - 0.35 | 96 - 0.37 | 99.6 - 0.31 | 90 - 0.31 |
| After Membrane Treatment<br>With Glutaldehyde | 99.9 - 0.36 | 96 - 0.38 | 99.7 - 0.30 | 90 - 0.31 |

EP 0 117 919 B1

Examples 6 and 7

The same two kinds of semipermeable membranes as used in Examples 4 and 5, MEMBRANE A and MEMBRANE B, were operated with 3.5 wt% of an aqueous sodium chloride solution. These same membranes were then operated with 2 wt% of an aqueous ethanol solution in the same way as in Examples 4 and 5. However, in this case, the two membranes were treated with a supplied aqueous ethanol solution containing 1000 ppm of p-phenylenediamine instead of an aqueous polyethyleneimine solution for three hours.

In another experiment, the foregoing two membranes were soaked in 5000 ppm of an aqueous m-phenylenediamine solution for three hours.

The reverse osmosis performance of the aforesaid membranes was measured with 3.5 wt% of an aqueous sodium chloride solution and 2.0 wt% of an aqueous ethanol solution. The test results for each membrane treatment under pressurised operating conditions and with soaking only under atmospheric conditions are shown in Tables 2 as Examples 6 and 7.

Table 2

| Reverse Osmosis Performance | with MEMBRANE A | | with MEMBRANE B | |
|---|---|---|---|---|
| | for NaCl aq.<br>Rej. – Flux<br>(%) – (m³/m² a day) | for Ethanol aq.<br>Rej. – Flux<br>(%) – (m³/m² a day) | for Nacl aq.<br>Rej. – Flux<br>(%) – (m³/m² a day) | for Ethanol aq.<br>Rej. – Flux<br>(%) – (m³/m²a day) |
| Before Membrane Treatment | 99.7 – 0.40 | 92 – 0.47 | 99.4 – 0.41 | 85 – 0.44 |
| After Membrane Treatment<br>Example 6 with p-phenylene-diamine under pressurized conditions | 99.9 – 0.32 | 97 – 0.33 | 99.5 – 0.39 | 88 – 0.42 |
| After Membrane Treatment<br>Example 7 with m-phenylene-diamine under atmospheric conditions | 99.9 – 0.24 | 96 – 0.25 | 99.5 – 0.37 | 87 – 0.40 |

EP 0 117 919 B1

## Example 8

Using the same membrane elements as in Example 2, the improvement in selective separation performance was examined in relation to the concentrations of membrane treatment agent with polyepiaminohydrin as water-soluble amino compounds.

Each reverse osmosis test was conducted with 3.5 wt% of an aqueous sodium chloride solution under operating conditions of 54.9 bar (56 kg/cm$^2$), 25°C, pH 6.5, 10 l/min as feed-water flow rate and 13% water recovery, 1 to 100 ppm of polyepiaminohydrin being dosed into said feed-water. The changes of the salt passage ratio in the permeated water are explained in Table 3.

## Table 3

| | Salt passage ratio in the permeated water | | | |
|---|---|---|---|---|
| Elapsed time (hours) | 0 | 5 | 15 | 60 |
| Concentration of Dosed Polyepiamino-hydrin (ppm)  1 | 1.0 | 0.95 | 0.95 | 0.90 |
| 10 | 1.0 | 0.85 | 0.70 | 0.50 |
| 100 | 1.0 | 0.70 | 0.50 | 0.50 |

### Example 9

A sea water desalination plant for a production of 1600 m³/m² a day of potable water by reverse osmosis was constructed by using membrane elements consisting of cross-linked polyfurfuryl alcohols. Operation was started on a sea water concentration as high as 4.5 wt%, under the operating conditions of 63.7 bar (65 kg/cm²), 25°C, pH 6.5 and a water recovery as high as 40%.

Although the initial product water quality was 300 ppm, which was low enough to meet the standard value of 500 ppm set by the WHO for drinking water, it gradually increased as the sea water temperature increased in accordance with seasonal changes (from winter to summer) and due to other problems such as membrane deterioration by oxidating substances such as chlorine or oxygen. In the summer, product water quality increased to more than 450 ppm at 35°C (sea water temperature), thereby requiring a method to improve selective separation performance, i.e. membrane treatment.

A very small amount of polyepichlorohydrin modified by ethylenediamine, i.e. 300 g, was dosed into the feed-water for only three minutes and the same amount of glyoxal was then dosed into the feed-water under the usual operating conditions.

Selective separation performance was immediately improved, and was superior to the initial reverse osmosis performance of the plant, i.e. product water quality was improved to 250 ppm.

However, after 2000 hours of operation, product water quality had already risen to more than 450 ppm. Therefore, the same membrane treatments as described above were conducted again and the expected results were obtained, i.e. product water quality was recovered to the initial value.

### Example 10

After the first membrane treatment using polyepichlorohydrin modified by ethylenediamine and not using glyoxal as in Example 9, one of the aforesaid elements was used for 4.2 wt% of sea water continuously dosed with 5 ppm of polyethyleneimine under the operating conditions of 61.8 bar (63 kg/cm²), 35°C, pH 6.5 and 13% water recovery. In this case, a permeated water quality of 150 ppm was maintained even after 2000 hours of operation.

### Example 11

The same semipermeable membrane element as manufactured in Example 2 were treated successively with 50 ppm of an aqueous solution of triethylenetetramine modified polyepihalohydrin and 50 ppm of succinaldehyde in due order. By using said membrane elements, a concentration and recovery process of valuable materials by reverse osmosis was performed, the main object material being supric sulfate. Membrane life was more than three months, proving that the aforesaid process is sufficiently economical and practical for industrial standards.

### Comparative Example 5

The same membrane elements as manufactured in Example 2 were used for the aforesaid concentration and recovery process in the same way as in Example 11, except that the successive membrane treatments with triethylenetetramine modified polyepihalohydrin and succinaldehyde were omitted. In this case, however, selective separation performance, which at the beginning of the operation was good enough for the purpose, could not maintain the critical point for the recovery process of the object materials after two months, i.e. membrane life was less than two months, which means that the aforesaid process using these membrane elements was neither economical nor practical for industrial use.

### Example 12

A concentration and recovery plant of epsilon-caprolactam from the industrial waste water by reverse osmosis was constructed using membrane elements made of semipermeable composite membranes composed of cross-linked polyfurfuryl alcohols, manufactured in accordance with Example 4 in Laid-Open Japanese Patent Application No. 11,005/1983 (Tokkai-sho 58—11005).

More than 5 wt% of epsilon-caprolactam was obtained by the aforesaid process from industrial waste water having an epsilon-caprolactam concentration of less than 0.1 wt%, wherein the permeated water from said reverse osmosis plant contained less than 20 ppm of epsilon-caprolactam at the initial stage. The foregoing plant was continuously operated under such operating conditions as 39.2 bar (40 kg/cm²) and 35°C, and after 15,000 hours of operation permeated water quality was fairly closed to the critical value set for water pollution.

Membrane modules were first cleaned with a highly diluted aqueous solution of detergents, and after foulants were cleaned off the surface of the membranes, two kinds of membrane treatment were carried out as follows: with feed-water containing 100 ppm of polyepiaminohydrin and 100 ppm of isophthaldehyde in due order for one hour and 10 minutes in each case. After these membrane treatments were over, the permeated water quality was recovered to its initial value.

## Claims

1. A method for improving the selective permeability of a semipermeable membrane comprising: contacting the membrane in consecutive steps with:
(i) a water-soluble amine; and
(ii) A water-soluble aldehyde
in feed water, both compounds reacting to form a water-insoluble or very slightly water-soluble material.

2. The method as defined in claim 1, wherein the water-insoluble or very slightly water-soluble material formed has a solubility in water of less than 100 ppm.

3. The method as defined in claim 1, wherein the semipermeable membrane comprises cross-linked polyfurfuryl alcohol or polyamide.

4. The method as defined in claim 3, wherein the polyfurfuryl alcohol is a homo-polymer of furfuryl alcohol and/or a co-polymer of furfuryl alcohol and a polyfunctional hydroxy compound.

5. The method as defined in claim 3, wherein the polyfurfuryl alcohol is made by the thermopolymerization of furfuryl alcohol and/or mixtures of furfuryl alcohol and polyfunctional hydroxy compounds in the presence of acid catalyst.

6. The method as defined in claim 3, wherein the polyamide is the polycondensation product of an amine-modified-polyepihalohydrin and a polyfunctional acid chloride.

7. The membrane treatment method as defined in claim 1, wherein the water-soluble amine is selected from the group consisting of triethylenetetramin, tetraethylenepentamine, polyepiaminohydrin, polyethyleneimine and polyepihalohydrin modified by ethylenediamine, triethylenetetramino, aminomethylpiperidine, polyethyleneimine and the water-soluble aldehyde is selected from the group consisting of glyoxal, glutaldehyde, succinaldehyde and phthaldehyde.

8. The method as defined in claim 1, wherein the water-soluble amine is a polyfunctional amine and the water-soluble aldehyde is a polyfunctional aldehyde.

9. The method as defined in claim 8, wherein the water-soluble polyfunctional amine is selected from the group consisting of ethylenediamine, trimethylenediamine, hexamethylenediamine, aminoguanidine, phenylenediamine, triaminobenzene, phenylhydrazine, aminodiphenylamine, diaminodiphenylmethane, diaminecyclohexane, aminomethylpiperidine, aminopiperidine, triethylenetetramine, tetraethylenepentamine, polyepiaminohydrin, and polyepihalohydrin modified by a polyfunctional amine.

10. The method as defined in claim 9, wherein the water-soluble polyfunctional amine is polyepihalohydrin modified by a polyfunctional amine and is selected from the group consisting of polyfunctional polyepihalohydrin modified by ethylenediamine, triethylenetetramine, aminomethylpiperidine and poly(ethyleneimine).

11. The method as defined in claim 1, wherein the semipermeable membrane is a composite membrane comprising a microporous substrate and ultrathin film formed thereon.

12. The method as defined in claim 1, said contacting steps being effected at a pressure from atmospheric pressure up to 98.07 bar (100 kg/cm²).

13. The method as defined in claim 12, wherein the pressure is from 2.9 to 68.6 bar (3 to 70 kg/cm²).

14. The method as defined in claim 1, wherein the concentrations of the water-soluble organic compounds are in the range 0.1 ppm to 1% by weight.

15. The method as defined in claim 14, wherein the concentrations are 1 to 1000 ppm.

## Patentansprüche

1. Verfahren zur Verbesserung der selektiven Permeabilität eines semipermeablen Membran, welches umfaßt:
Kontakt dieser Membran in aufeinanderfolgenden Schritten mit:
I) einem wasserlöslichen Amin und
II) einem wasserlöslichen Aldehyd
in Speisewasser, wobei beide Verbindungen reagieren, um ein wasserunlösliches oder sehr schwach wasserlösliches Material zu bilden.

2. Verfahren nach Anspruch 1, worin das gebildete wasserunlösliche oder sehr schwach wasserlösliche Material eine Wasserlöslichkeit von weniger als 100 ppm aufweist.

3. Verfahren nach Anspruch 1, worin die semipermeable Membran vernetzten Polyfurfurylalkohol oder vernetztes Polyamid umfaßt.

4. Verfahren nach Anspruch 3, worin der Polyfurfurylalkohol ein Homopolymer von Furfurylalkohol und/oder ein Copolymer von Furfurylalkohol und einer mehrwertigen Hydroxyverbindung ist.

5. Verfahren nach Anspruch 3, worin der Polyfurfurylalkohol durch Wärmepolymerisation von Furfurylalkohol und/oder Mischungen von Furfurylalkohol und mehrwertigen Hydroxyverbindung in Gegenwart eines sauren Katalysators hergestellt wurde.

6. Verfahren nach Anspruch 3, worin das Polyamid das Polykondensationsprodukt eines mit Amin modifizierten Polyepihalogenhydrins und eines mehrwertigen Säurechlorids ist.

7. Verfahren zur Behandlung einer Membran nach Anspruch 1, worin das wasserlösliche Amin aus der Gruppe ausgewählt ist, die aus Triethylentetramin, Tetraethylenpentamin, Polyepiaminohydrin, Polyethylenimin und Polyepihalohydrin besteht, das mit Ethylendiamin, Triethylentetramino, Aminomethylpiperidin, Polyethylenimin modifiziert wurde und das wasserlösliche Aldehyd aus der Gruppe ausgewählt ist, die aus Glyoxal, Glutaldehyd, Succinaldehyd und Phthaldehyd besteht.

8. Verfahren nach Anspruch 1, worin das wasserlösliche Amin ein mehrwertiges Amin und das wasserlösliche Aldehyd ein mehrwertiges Aldehyd ist.

9. Verfahren nach Anspruch 8, worin das wasserlösliche mehrwertige Amin aus der Gruppe ausgewählt ist, die aus Ethylendiamin, Trimethylendiamin, Hexamethylendiamin, Aminoguanidin, Phenylendiamin, Triaminobenzen, Phenylhydrazin, Aminodiphenylamin, Diaminodiphenylmethan, Diamincyclohexan, Aminomethylpiperidin, Aminopiperidin, Triethylentetramin, Tetraethylenpentamin, Polyepiaminohydrin und mit einem mehrwertigen Amin modifiziert Polyepihalogenhydrin besteht.

10. Verfahren nach Anspruch 9, worin das wasserlösliche mehrwertige Amin mit einem mehrwertigen Amin modifiziertes Polyepihalogenhydrin ist und aus der Gruppe ausgewählt ist, die aus mehrwertigem Polyepihalogenhydrin besteht, das mit Ethylendiamin, Triethylentetramin, Aminomethylpiperidin und Poly(ethylenimin) modifiziert wurde.

11. Verfahren nach Anspruch 1, worin die semipermeable Membran eine zusammengesetzte Membran ist, die ein mikroporöses Substrat und einen darauf gebildeten Dünnschichtfilm umfaßt.

12. Verfahren nach Anspruch 1, worin die Kontaktschritte bei einem Druck vom atmosphärischen Druck bis zu 98,07 bar (100 kg/cm$^2$) durchgeführt werden.

13. Verfahren nach Anspruch 12, worin der Druck von 2,9 bis 68,6 bar (3 bis 70 kg/cm$^2$) beträgt.

14. Verfahren nach Anspruch 1, worin die Konzentration der wasserlöslichen organischen Verbindungen im Bereich von 0,1 ppm bis 1 Gew.% liegt.

15. Verfahren nach Anspruch 14, worin die Konzentration 1 bis 1000 ppm beträgt.


**Revendications**

1. Procédé pour améliorer la perméabilité sélective d'une membrane semi-perméable comprenant:
la mise en contact de la membrane au cours d'étapes consécutive avec:
(i) une amine soluble dans l'eau; et
(ii) un aldéhyde soluble dans l'eau
dans de l'eau d'alimentation, les deux composés réagissant pour former un produit insoluble dans l'eau ou très légèrement soluble dans l'eau.

2. Procédé selon la revendication 1, dans lequel le produit insoluble dans l'eau ou très légèrement soluble dans l'eau formé présente une solubilité dans l'eau de moins de 100 ppm.

3. Procédé selon la revendication 1, dans lequel la membrane semi-perméable comprend du poly(alcool furfurylique)réticule ou du polyamide.

4. Procédé selon la revendication 3, dans lequel le poly(alcool furfurylique) est un homopolymère d'alcool furfurylique et/ou un copolymère d'alcool furfurylique et d'un composé hydroxylé polyfonctionnel.

5. Procédé selon la revendication 3, dans lequel on fabrique le poly(alcool furfurylique) par thermopolymérisation d'alcool furfurylique et/ou de mélanges d'alcool furfurylique et de composés hydroxylés polyfonctionnels en présence d'un catalyseur acide.

6. Procédé selon la revendication 3, dans lequel le polyamide est le produit de polycondensation d'une polyépihalohydrine modifiée par une amine et d'un chlorure d'acide polyfonctionnel.

7. Procédé de traitement de membrane selon la revendication 1, dans lequel l'amine soluble dans l'eau est choisie dans le groupe constitué par la triéthylènetétramine, le tétraéthylènepentamine, la polyépiaminohydrine, la polyéthylèneimine et une polyépihalohydrine modifiée par l'éthylènediamine, la triéthylènetétramine, l'aminométhylpipéridine, la polyéthylèneimine et l'aldéhyde soluble dans l'eau est choisi dans le groupe constitué par le glyoxal, le glutaldéhyde, le succinaldéhyde et le phtaldéhyde.

8. Procédé selon la revendication 1, dans lequel l'amine soluble dans l'eau est une amine polyfonctionnelle et l'aldéhyde soluble dans l'eau est un aldéhyde polyfonctionnel.

9. Procédé selon la revendication 8, dans lequel l'amine polyfonctionnelle soluble dans l'eau est choisie dans le groupe constitué par l'éthylènediamine, la triméthylènediamine, l'hexaméthylènediamine,

EP 0 117 919 B1

l'aminoguanidine, le phénylènediamine, le triaminobenzène, la phénylhydrazine, l'aminodiphénylamine, le diaminodiphénylméthane, le diaminocyclohexane, l'aminométhylpipéridine, l'aminopipéridine, la triéthylènetétramine, la tétraéthylènepentamine, la polyépiaminohydrine, et une polyépihalohydrine modifié par une amine polyfonctionnelle.

10. Procédé selon la revendication 9, dans lequel l'amine polyfonctionnelle soluble dans l'eau est polyépihalohydrine modifiée par une amine polyfonctionnelle et est choisie dans le groupe constitué par une polyépihalohydrine polyfonctionnelle modifiée par l'éthylènediamine, la triéthylènetétramine, l'aminométhylpipéridine et la poly(éthylèneimine).

11. Procédé selon la revendication 1, dans lequel la membrane semi-permeable est une membrane composite comprenant un substrat microporeux et un film ultramince formé sur ce substrat.

12. Procédé selon la revendication 1, sachant que l'on réalisé les étapes de mise en contact à une pression comprise entre la pression atmosphérique et 98,07 bars (100 kg/cm$^2$).

13. Procédé selon la revendication 12, dans lequel la pression est comprise entre 2,9 et 68,6 bars (3 et 70 kg/cm$^2$).

14. Procédé selon la revendication 1, dans lequel les concentrations des composés organiques solubles dans l'eau sont comprises entre 0,1 ppm et 1% en poids.

15. Procédé selon la revendication 14, dans lequel les concentrations sont comprises entre 1 et 1000 ppm.

14